**Europäisches Patentamt**

**European Patent Office**

**Office européen des brevets**

(11) Numéro de publication : **0 028 965**
**B1**

(12) # FASCICULE DE BREVET EUROPÉEN

(45) Date de publication du fascicule du brevet :
**13.06.84**

(51) Int. Cl.³ : **G 07 C 11/00**, G 07 F 7/00

(21) Numéro de dépôt : **80401534.5**

(22) Date de dépôt : **29.10.80**

(54) Système d'identification de personnes demandant l'accès à certains milieux.

(30) Priorité : **09.11.79 FR 7927705**

(43) Date de publication de la demande :
**20.05.81 Bulletin 81/20**

(45) Mention de la délivrance du brevet :
**13.06.84 Bulletin 84/24**

(84) Etats contractants désignés :
**DE FR IT NL**

(56) Documents cités :
**DE-A- 2 635 180**
**FR-A- 2 019 390**
**FR-A- 2 417 141**
**US-A- 3 659 046**
**US-A- 3 764 742**
**US-A- 3 806 874**

(73) Titulaire : **COMPAGNIE INTERNATIONALE POUR L'INFORMATIQUE CII - HONEYWELL BULL (dite CII-HB)**
**94, avenue Gambetta**
**F-75020 Paris (FR)**

(72) Inventeur : **Herve, Robert Jean Louis Anthine**
**98, avenue de Paris**
**F-78000 Versailles (FR)**

(74) Mandataire : **Doireau, Marc et al**
**CII-Honeywell Bull Division Propriété Industrielle**
**94, avenue Gambetta Boîte Postale 33**
**F-75960 Paris cedex 20 (FR)**

Jouve, 18, rue St-Denis, 75001 Paris, France

## Description

La présente invention concerne un système d'identification de personnes demandant l'accès à certains milieux.

Il est connu de tels systèmes autorisant des personnes habilitées à accéder à un milieu soit par un mot de passe immatériel, soit par un objet portatif, soit éventuellement les deux. Ces systèmes présentent deux inconvénients majeurs. D'une part pour retirer à une personne son habilitation, il faut informer le milieu. En effet, on ne peut faire oublier à une personne son mot de passe, et elle a pu reproduire ou simuler un objet portatif du type clé ou serrure ou badge. D'autre part un fraudeur peut à l'insu de la personne habilitée, voler le mot de passe, reproduire ou simuler l'objet portatif et ces fraudes ne peuvent pas être diagnostiquées à coup sûr.

Il est connu par le brevet US-A-3 806 874 un système pour la mise en œuvre d'un procédé permettant d'identifier des personnes, utilisant d'une part un objet portatif comprenant une mémoire dans laquelle est enregistré un code secret, une mémoire dans laquelle est enregistré un code d'identification, un système de commande à programme, ainsi que des moyens de traitement des informations contenues dans lesdites mémoires et d'autre part un appareil comprenant une mémoire dans laquelle est enregistré un code secret, un système de commande à programme, ainsi que des moyens de traitement des informations contenues dans ladite mémoire, le procédé comportant plusieurs étapes, dont celles consistant à lire le code d'identification enregistré dans la mémoire de l'objet portatif et à générer un code aléatoire à destination des moyens de traitement de l'objet portatif et de l'appareil.

Ce brevet antérieur ne résoud pas le problème de la fraude possible au niveau de l'appareil, notamment en ce qui concerne le code secret enregistré en permanence dans une mémoire de l'appareil.

La présente invention consiste à éliminer cet inconvénient grâce à deux objets portatifs à la fois non reproductibles, non simulables et non mémorisables.

L'invention propose donc un système d'identification de personnes demandant l'accès à un milieu protégé à partir d'un objet portatif comprenant une mémoire dans laquelle sont au moins enregistrés un code secret S, un code d'identification In du détenteur de l'objet portatif et un programme P, des circuits de traitement pour exécuter le programme P, l'accès audit milieu étant assuré par un appareil auquel ledit objet portatif est connecté, ledit appareil comprenant une mémoire dans laquelle sont au moins enregistrés le même code secret, le même code d'identification In et le même programme P, des circuits de traitement pour exécuter le programme P, un générateur de nombres aléatoires E et un circuit comparateur pour comparer des résultats R calculés par les circuits de traitement de l'objet portatif et de l'appareil et ainsi autoriser l'accès au milieu en cas d'identité des résultats R, chaque résultat R issu de l'exécution du programme P étant fonction du code secret S, du code d'identification In et d'un nombre aléatoire E émis par le générateur, caractérisé en ce que les circuits de traitement et la mémoire de l'appareil sont situés dans un objet portatif connecté audit appareil, les informations enregistrées dans la mémoire dudit objet portatif étant inaccessibles de l'extérieur.

L'avantage de ce système est qu'il permet à un milieu d'identifier un objet portatif avec un très haut niveau de sécurité. Le procédé utilisé est le suivant. Le milieu lit dans la mémoire de l'objet portatif le code d'identification In qui y est inscrit et génère un nombre aléatoire E. Le milieu disposant d'un dispositif électronique similaire à celui de l'objet portatif calcule lui-même la fonction $R = p(S, E, In)$. Ce calcul étant terminé, il propose ensuite le nombre aléatoire E au dispositif électronique de l'objet portatif à identifier puis il contrôle en retour la conformité des résultats obtenus.

Dans ces conditions, un fraudeur disposant d'un faux objet portatif générant tout de même correctement le code d'identification In est éliminé en raison de tests effectués sur le résultant R qui a nécessité pour son obtention la prise en compte du code secret S.

A un autre niveau de fraude, une carte légale portant l'identité In ne peut servir à prouver une autre identité In'.

L'invention sera mieux comprise à l'aide de la description faite au regard des dessins qui va suivre.

La figure 1 est une représentation simplifiée du système selon l'invention.

La figure 2 est une représentation détaillée du système de la figure 1.

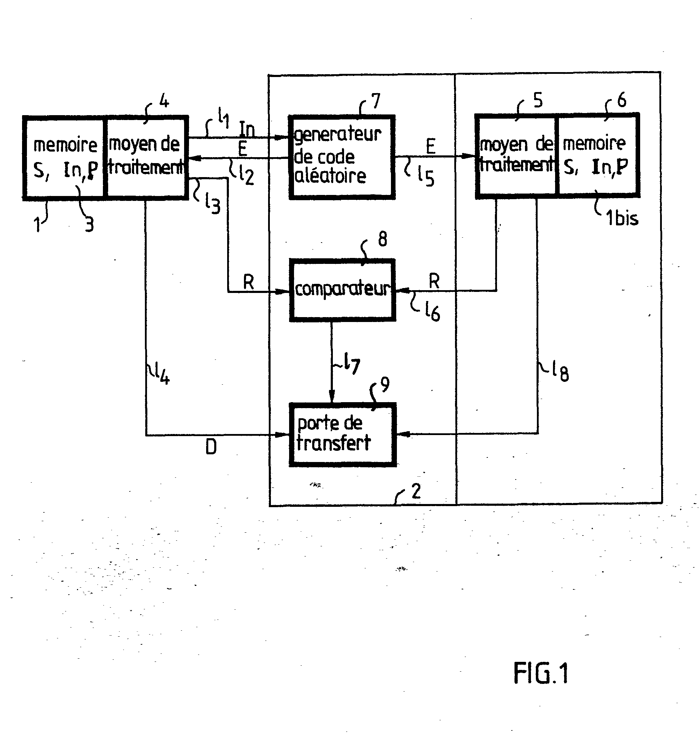

Le système représenté à la figure 1 se compose d'un objet portatif et d'un appareil (2). L'objet portatif (1) comprend au moins une mémoire (3) associée à des moyens de traitement (4). Les moyens de traitement (4) peuvent être constitués d'un microprocesseur comme cela est décrit dans le brevet français N° 2 401 459. L'appareil (2) comprend un dispositif électronique (1 bis) similaire à l'objet portatif (1) composé d'une mémoire (6) et des moyens de traitement (5) de cette mémoire, un générateur (7) de codes aléatoires (E), un comparateur (8) et une porte de transfert (9).

Dans le cas de la figure 1 le milieu à protéger se trouve être la mémoire (6) pour laquelle l'accès est contrôlé. L'objet portatif (1) peut être relié électriquement au générateur (7) de codes aléatoires (E) par les lignes ($l_1$, $l_2$) au comparateur (8) par la liaison ($l_3$) et à la porte de transfert (9) par la liaison ($l_4$) lorsque l'accès à la mémoire (6) est demandé. Le dispositif électronique (1 bis) est relié au générateur (7) de codes aléatoires (E) par la liaison (I₅), au comparateur (8) par la liaison (I₆) et à la porte de transfert (9) par la liaison (I₈). La mémoire (3) de l'objet portatif (1) ainsi que celle (6) du dispositif électronique (1 bis) contiennent chacune un code secret (S), un programme P fixe et un code d'identification (In).

L'accouplement de l'objet portatif (1) aux dispositifs du milieu (2) provoque la lecture du code d'identification (In) dans la mémoire de l'objet portatif (1). Ce code d'identification (In) est déposé sur la ligne (I₁). Si le code d'identification est plausible, le générateur (7) génère un même code aléatoire (E) sur la ligne (I₂) à destination de l'objet portatif (1) et sur la ligne (I₅) à destination du dispositif électronique (1 bis). Les microprocesseurs constituant les moyens de traitement (4) et les moyens de traitement (5) calculent alors chacun un nombre (R) qui est une fonction du code secret (S), du programme (P), du code aléatoire (E) et du code d'identification (In) résidant dans chacune des mémoires.

Le nombre (R) est transmis sur chacune des liaisons (I₃) et (I₆) à destination du comparateur (8) qui, si la relation entre les deux nombres (R) est acceptable, envoie un signal de commande à la porte de transfert (9) sur la ligne (I₇), pour autoriser par exemple le transfert des informations entre l'objet portatif (1) et le dispositif électronique (1 bis) sur les lignes (I₄) et (I₈). La fonction de comparaison des nombres (R) peut être choisie absolument quelconque, dans une réalisation simple le comparateur établira que les deux nombres sont égaux, mais il est bien évident qu'il est possible de choisir une multitude d'autres fonctions logiques. On voit donc qu'un objet portatif (faux) fabriqué par un fraudeur a toutes les chances de générer un faux résultat (R) car ce dernier ne dispose, ni du code secret, ni du programme P.

D'autre part, on remarquera que la valeur de (E) n'est jamais la même au cours du temps et qu'elle est imprévisible, le résultat du calcul (R) qui correspond à chaque valeur (E) varie donc lui aussi continuement au cours du temps et est également imprévisible ce qui rend inefficace toute tentative de fraude.

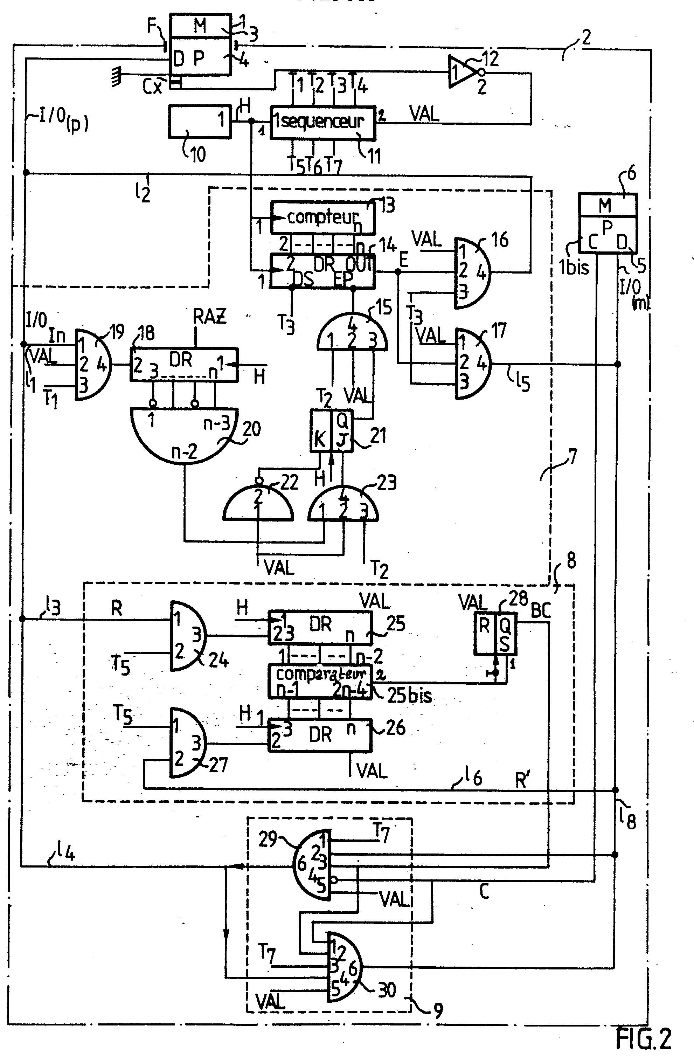

Le système représenté à la figure 2 représente les détails du système. Un objet portatif (1) composé de sa mémoire (3) et de son organe de traitement (4) est introduit par la fente (F) de l'appareil (2). L'appareil comprend un contact (Cₓ) pour indiquer à celui-ci qu'un objet portatif vient d'être introduit par la fente (F). Un plot de ce contact est relié à la masse de l'appareil, l'autre est relié à l'entrée 1 de l'inverseur (12) délivrant à sa sortie 2 un signal VAL en direction de l'entrée 2 du séquenceur (11). L'entrée 1 du séquenceur (11) est pilotée par les signaux délivrés par la sortie 1 de l'horloge (10). L'horloge (10) peut être réalisée de façon très classique à l'aide d'un multivibrateur à transistors. La réalisation du séquenceur (11) pourra être faite à l'aide de basculeurs montés en anneaux. Le séquenceur (11) délivre les signaux de synchronisation (T₁) à (T₇) à l'ensemble du système.

Le générateur (7) du code aléatoire (E) comprend un compteur en anneaux à n-1 basculeurs piloté par la sortie 1 du générateur d'horloge (10). Les sorties 2 à n de ce compteur sont reliées respectivement aux entrées parallèles 2 à n d'un registre à décalage DR (14). Le registre (14) est piloté sur son entrée 1 par la sortie 1 du générateur d'horloge (10). L'entrée DS du registre à décalage (14) reçoit le signal (T₃) du séquenceur (11) pour commander le décalage en série vers la droite des bits d'information contenus dans le registre (14). L'entrée (EP) du registre (14) est reliée à la sortie 4 de la porte ET (15) pour commander le transfert des bits d'informations présents sur les entrées parallèles 2 à n dans le registre. Le code aléatoire (E) sort du registre (14) par sa sortie marquée « out » et est appliqué sur les entrées 2 des portes ET (16) et ET (17). Les portes ET (16) et ET (17) reçoivent sur leur entrée 1 le signal VAL délivré par la sortie 2 de l'inverseur (12) et sur leur entrée 3 le signal de synchronisation (T₃) délivré par le séquenceur (11). La sortie 4 de la porte ET (16) délivre le signal (E) sur la ligne (I₂) lorsque les entrées 1 et 3 sont commandées simultanément par les signaux VAL et (T₃).

La sortie 4 de la porte ET (17) délivre le signal (E) sur la ligne (I₅) lorsque les entrées 1 et 3 sont commandées simultanément par les signaux VAL et (T₃). La porte ET (15) est commandée, sur son entrée 1 par le signal de synchronisation (T₂) émis par le séquenceur (11), sur son entrée 2 par le signal VAL émis par la sortie de l'inverseur (12) et sur son entrée 3 par un signal de commande émis par la sortie Q du basculeur (21). Le basculeur (21) est synchronisé par le signal sortant du générateur d'horloge (10), sa sortie Q prend l'état 1 logique lorsque l'entrée J est commandée et prend l'état 0 lorsque son entrée K est commandée. L'entrée J du basculeur (21) est reliée à la sortie 4 de la porte ET (23) qui reçoit respectivement sur ses entrées 1, 2 et 3, un signal émis par la sortie n-2 du décodeur (20), le signal VAL de l'inverseur (12) et le signal de synchronisation (T₂) délivré par le séquenceur (11).

L'entrée K du basculeur (21) est reliée à la sortie 2 de l'inverseur (22) qui reçoit sur son entrée 1 le signal VAL de l'inverseur (12). Les entrées 1 à n-3 du décodeur (20) sont reliées respectivement aux sorties 3 à n du registre à décalage DR (18). Le registre (18) est synchronisé sur son entrée 1 par le signal H émis par le générateur d'horloge (10) et est connecté sur son entrée 2 à la sortie 4 de la porte ET (19) qui reçoit respectivement sur ses entrées 1, 2 et 3, les signaux du code d'identification (In) émis sur la ligne (I₁), le signal VAL émis par l'inverseur (12) et le signal (T₁) du séquenceur (11).

Le dispositif de comparaison (8), comprend un comparateur (25 bis) dont les entrées 1 à n-2 sont reliées respectivement aux sorties 3 à n du registre à décalage DR (25) et les entrées n-1 à 2n-4 sont reliées respectivement aux entrées 3 à n du registre à décalage DR (26). Les registres (25) et (26) sont synchronisés par le signal de synchronisation H délivré par le générateur d'horloge (10) et commandés par le signal VAL émis par la sortie 2 de l'inverseur (12). L'entrée 2 du registre à décalage (25) est reliée à la sortie 3 de la porte ET (24) dont les entrées 1 et 2 reçoivent respectivement le résultat (R) transmis par la ligne (I₃) et le signal de synchronisation (T₅). L'entrée 2 du registre à décalage (26) est reliée à la sortie 3 de la porte ET (27) qui reçoit respectivement sur ses entrées 1 et 2 le signal de synchronisation (T₅) émis par le séquenceur (11) et le résultat (R') transmis sur la ligne (I₆). Lorsqu'il y a identité entre les contenus des registres (25) et (26) un signal apparaît sur la sortie 2 du comparateur (25 bis), ce signal est transmis sur l'entrée 1 du basculeur (28) synchronisé par le signal d'horloge émis par le générateur (10). Le basculeur (28) est remis à zéro par le signal VAL généré par la sortie de l'inverseur (12) et appliqué sur l'entrée (R) du basculeur (28).

Le dispositif de transfert de données (9) comprend les portes ET (29) et (30). La porte ET (29) a 5 entrées, l'entrée 1 est commandée par le signal de synchronisation (T₇) émis par le séquenceur (11), l'entrée 2 reçoit le signal transmis sur la ligne (I₈), l'entrée 4 reçoit un signal de commande (C) émis par le dispositif électronique (1 bis), l'entrée 3 le signal BC transmis par la sortie Q du basculeur (28) qui prend l'état 1 logique lorsque l'identité des résultats (R) est détectée par le comparateur (25 bis), et sur son entrée 5 le signal VAL émis par l'inverseur (12). La porte ET (30) a également 5 entrées, l'entrée 1 est commandée par le signal de commande (C) émis par le dispositif électronique (1 bis), l'entrée 2 reçoit le signal BC émis par le basculeur (28), l'entrée 3 est commandée par le signal de synchronisation (T₇) émis par le séquenceur (11), l'entrée 4 reçoit les données émises sur la ligne (I₄) par l'objet portatif (1), l'entrée 5 est commandée par le signal VAL généré par la sortie 2 de l'inverseur (12). La sortie 6 de la porte ET (30) transmet les données transmises sur la ligne (I₄) vers la ligne (I₈). Le dispositif électronique (1 bis) se compose comme sur la figure 1 de la mémoire M6 et du dispositif de commande (5), il comprend une porte d'entrée-sortie (D) sur laquelle viennent se raccorder les lignes 5 et 8 et une sortie de commande (C) est reliée aux portes de transfert (9).

De même l'objet portatif (1) comprend une porte d'entrée-sortie (D) sur laquelle viennent se raccorder les lignes (I₁) à (I₄).

Le fonctionnement du dispositif représenté à la figure 2 est le suivant. La présentation de l'objet portatif dans le milieu 2 ferme le contact (Cx) et fait apparaître le signal VAL à la sortie de l'inverseur (12). Le signal VAL commande alors les cycles (T₁) à (T₇) du séquenceur (11) sous le synchronisme de l'horloge (10). Le compteur (13) évolue en permanence sous le synchronisme de l'horloge (10) dès que l'ensemble du système est alimenté en énergie électrique par une source d'alimentation non représentée. Le code utilisé pour la progression du compteur peut être absolument quelconque dans le cas de figure 2, les combinaisons possibles sont au nombre de 2n-1. A l'instant (T₁) le code d'identification (In) émis par l'objet portatif (1) traverse la porte ET (19) et s'enregistre dans le registre à décalage (18) et le décodeur (20) identifie le code d'identification. A l'instant (T₂), si le code d'identification est correct, la bascule (21) commande la porte (15) qui commande à son tour le transfert de l'état du compteur (13) dans le registre à décalage DR14 (nombre E). A l'instant (T₃), le nombre (E) contenu dans le registre (14) est transmis en série par la sortie « OUT » du registre (14) en direction d'une part de l'objet portatif (1) par la ligne (I₂) au travers de la porte ET (16) et d'autre part en direction du dispositif électronique (1 bis) par la ligne (I₅) au travers de la porte ET (17). Les microprocesseurs contenus dans l'objet portatif (1) et dans le dispositif (1 bis) calculent alors le nombre R = p(S, E, In) pendant l'instant (T₄). A l'instant (T₅), les résultats de calcul sont transmis sur les lignes (I₃) et (I₆) en direction d'une part du registre à décalage DR₂₅ et d'autre part du registre à décalage DR₂₆ et la comparaison des résultats a lieu par le comparateur (25 bis). S'il y a égalité des résultats, la bascule BC prend l'état 1 et le transfert des données entre la mémoire 3 de l'objet portatif (1) et la mémoire (6) du dispositif électronique (1 bis) est autorisée.

Le système d'identification de personnes qui vient d'être décrit n'est pas limité à l'échange d'informations entre l'objet portatif (1) et l'appareil (2). L'appareil (2) pourra être appliqué à de nombreuses autres applications notamment aux accès de banques de données des systèmes de traitement de l'information, faire partie des caisses enregistreuses des commerçants ou des distributeurs de billets de banque.

Dans certains de ces cas et sans sortir du cadre même de l'invention, on pourra soumettre le fonctionnement de l'objet portatif à la présentation par son titulaire d'un mot de passe immatériel, que ce dernier devra présenter par exemple sur un clavier ou tout autre dispositif de transmission, pour permettre son contrôle par l'objet portatif lui-même.

Dans tous ces cas, le signal BC délivré par la bascule (28) pourra être utilement utilisé à la validation des transactions ou des opérations que l'opérateur titulaire de l'objet portatif désirera effectuer.

**Revendication**

Système d'identification de personnes demandant l'accès à un milieu protégé à partir d'un objet portatif (1) comprenant une mémoire (3) dans laquelle sont au moins enregistrés un code secret (S), un code d'identification (In) du détenteur de l'objet portatif (1) et un programme (P), des circuits de traitement (4) pour exécuter le programme (P), l'accès audit milieu étant assuré par un appareil (2) auquel ledit objet portatif (1) est connecté, ledit appareil (2) comprenant une mémoire (6) dans laquelle sont au moins enregistrés le même code secret (S), le même code d'identification (In) et le même programme (P), des circuits de traitement (5) pour exécuter le programme (P), un générateur (7) de nombres aléatoires (E) et un circuit comparateur (8) pour comparer des résultats (R) calculés par les circuits de traitement (4 ; 5) de l'objet portatif (1) et de l'appareil (2) et ainsi autoriser l'accès au milieu en cas d'identité des résultats (R), chaque résultat (R) issu de l'exécution du programme (P) étant fonction du code secret (S), du code d'identification (In) et d'un nombre aléatoire (E) émis par le générateur (7), caractérisé en ce que les circuits de traitement (5) et la mémoire (6) de l'appareil (2) sont situés dans un objet portatif (1 bis) connecté audit appareil (2), les informations enregistrées dans la mémoire (6) de l'objet portatif (1 bis) étant inaccessibles de l'extérieur.

## Claim

A system for the identification of persons requesting access to a protected facility by means of a portable object (1) comprising a memory (3) in which are recorded at least one secret code (S), an identification code (In) of the holder of the portable object (1) and a programme (P), processing circuits (4) for executing the programme (P), the access to the said facility being assured by an apparatus (2) to which the said portable object (1) is connected, the said apparatus (2) comprising a memory (6) in which are at least recorded the same secret code (S), the same identification code (In) and the same programme (P), processing circuits (5) for executing the programme (P), a generator (7) of random numbers (E) and a comparator circuit (8) for comparing the results (R) calculated by the processing circuits (4 ; 5) of the portable object (1) and of the apparatus (2) and thus authorising access to the facility in the case of the sameness of the results (R), each result (R) issued from the execution of the programme (P) being a function of the secret code (S), of the identification code (In) and of a random number (E) emitted by the generator (7), characterised in that the processing circuits (5) and the memory (6) of the apparatus (2) are located in a portable object (1 bis) connected to the said apparatus (2), the data recorded in the memory (6) of the portable object (1 bis) being inaccessible externally.

## Anspruch

System zur Identifizierung von Personen, die Zugang zu einem geschützten Bereich begehren, mittels eines tragbaren Gegenstands (1), der einen Speicher (3), in welchem wenigstens ein geheimer Code (S), ein Code (In) zur Identifizierung des Inhabers des tragbaren Gegenstands (1) und ein Programm (B) gespeichert sind, und Verarbeitungsschaltungen (4) zur Ausführung des Programms (P) enthält, wobei der Zutritt zu dem Bereich durch ein Gerät (2) gesichert wird, an das der tragbare Gegenstand (1) angeschlossen wird, wobei dieses Gerät (2) einen Speicher (6), in welchem wenigstens der geheime Code (S), derselbe Identifizierungscode (In) und dasselbe programm (P) gespeichert sind, Verarbeitungsschaltungen (5) zur Ausführung des Programms (P), einen Generator (7) zur Erzeugung von willkürlichen Zahlen (E) und eine Vergleicherschaltung (8) zum Vergleichen der Ergebnisse (R) enthält, die durch die Verarbeitungsschaltungen (4 ; 5) des tragbaren Gegenstands (1) und des Gerätes (2) berechnet werden, um auf diese Weise den Zutritt zu dem Bereich für den Fall identischer Ergebnisse (R) zu gewähren, und wobei jedes durch die Ausführung des Programms (E) erhaltene Ergebnis (R) von dem geheimen Code (S), dem Identifizierungscode (In) und einer willkürlichen, von dem Generator (7) abgegebenen Zahl (E) abhängt, dadurch gekennzeichnet, daß die Verarbeitungsschaltungen (5) und der Speicher (6) des Gerätes (2) in einem tragbaren Gegenstand (1 bis) angeordnet sind, der mit dem Gerät (2) verbunden ist, wobei die in dem Speicher (6) des tragbaren Gegenstandes (1 bis) gespeicherten Informationen von der Außenseite her unzugänglich sind.

FIG.1

FIG.2